# EUROPEAN PATENT APPLICATION

(11) **EP 4 527 540 A1**
(43) Date of publication of application: **26.03.2025**
(21) Application number: 23907279.6
(22) Date of filing: 22.08.2023
(51) Int. Cl.: B23K 26/362, B23K 26/082, B23K 26/0622, B23K 26/06, H01M 4/04, H01M 50/10, H01M 50/204, B23K 101/36

(54) **ETCHING MACHINE**

(30) Priority: 22.12.2022 KR 20220182357; 28.02.2023 KR 20230027291
(71) Applicant: LG Energy Solution, Ltd., Seoul 07335 (KR)
(72) Inventor: MOON, Hong-Seok, Daejeon 34122 (KR); LEE, Seo-Jun, Daejeon 34122 (KR); KIM, Tae-Su, Daejeon 34122 (KR); LEE, Heon-Seung, Daejeon 34122 (KR)
(74) Representative: Plasseraud IP
(86) International application number: PCT/KR2023/012424
(87) International publication number: WO 2024/135990

(57) **Abstract**

An etching machine is disclosed. The etching machine according to an embodiment of the present disclosure includes a laser source; a scanner configured to deflect light from the laser source to an electrode current collector coated with an electrode active material; and a processor configured to control at least one of the laser source or the scanner to keep a pulse distance of the light incident on the electrode current collector constant.

## Description

### TECHNICAL FIELD

The present disclosure relates to an etching machine.

The present application claims priority to Korean Patent Application No. 10-2022-0182357 filed on December 22, 2022 and Korean Patent Application No. 10-2023-0027291 filed on February 28, 2023 in the Republic of Korea, the disclosures of which are incorporated herein by reference.

### BACKGROUND ART

With a rapid increase in demand for portable electronic products such as laptop computers, video cameras, mobile phones and so on and the widespread use of robots, electric vehicles and so on, many studies are being made on high performance secondary batteries that can be recharged repeatedly.

Currently, commercially available secondary batteries include nickel-cadmium batteries, nickel-hydrogen batteries, nickel-zinc batteries, lithium secondary batteries and so on, and among them, lithium secondary batteries have little or no memory effect, and thus they are gaining more attention than nickel-based secondary batteries for their advantages that recharging can be done whenever it is convenient, the self-discharge rate is very low and the energy density is high.

Lithium secondary batteries primarily comprise lithium-based oxides and carbon materials for a positive electrode active material and a negative electrode active material, respectively. A lithium secondary battery includes an electrode assembly including a positive electrode plate and a negative electrode plate coated with the positive electrode active material and the negative electrode active material, respectively, with a separator interposed between the positive electrode plate and the negative electrode plate, and a sealed packaging or battery case accommodating the electrode assembly together with an electrolyte solution.

When manufacturing the electrode, a process of coating the positive electrode active material or the negative electrode active material on an electrode current collector may be performed. **In** this instance, when the coating areas on two surfaces of the electrode current collector are different, it results in low quality of the battery cell. Additionally, a slide phenomenon that occurs when the electrode active material in slurry state coated on the electrode current collector flows during drying, may degrade the quality of the battery cell.

### SUMMARY

### Technical Problem

The present disclosure is designed to solve these and other problems.

The present disclosure is directed to providing an electrode with improved active material coating quality of an electrode current collector.

The present disclosure is further directed to providing an electrode having the equal active material coating area on two surfaces of the electrode current collector.

The present disclosure is further directed to providing an etching machine for etching a peripheral portion of the coating using a laser to make the active material coating area on the two surfaces of the electrode current collector equal.

The present disclosure is further directed to providing an etching machine for minimizing damage to the electrode current collector when laser etching the peripheral portion of the active material coating on the electrode current collector.

### Technical Solution

To solve the above-described problem, an etching machine according to an embodiment of the present disclosure includes a laser source; a scanner configured to deflect light from the laser source to an electrode current collector coated with an electrode active material; and a processor configured to control at least one of the laser source or the scanner to keep a pulse distance of the light incident on the electrode current collector constant.

Additionally, the processor may stop the output of the laser source while a scan speed of the scanner increases or decreases.

Additionally, the scanner may include a mirror configured to reflect the light from the laser source; and a motor configured to rotate the mirror, and the processor may stop the output of the laser source while an angular velocity of the motor increases or decreases.

Additionally, the processor may perform control to reduce a trigger signal interval of the laser source with an increasing scan speed of the scanner.

Additionally, the scanner include a mirror configured to reflect the light from the laser source; and a motor configured to rotate the mirror, and the processor may perform control to reduce a trigger signal interval of the laser source with an increasing angular velocity of the motor.

Additionally, the processor may perform control to increase a trigger signal interval of the laser source with a decreasing scan speed of the scanner.

Additionally, the scanner may include a mirror configured to reflect the light from the laser source; and a motor configured to rotate the mirror, and the processor may perform control to increase a trigger signal interval of the laser source with a decreasing angular velocity of the motor.

Additionally, the processor may perform control to keep a trigger signal interval of the laser source constant while a scan speed of the scanner is kept constant.

Additionally, the processor may control at least one of the laser source or the scanner to keep a line energy density constant along a trajectory of the light incident on the electrode current collector.

An electrode according to an aspect of the present disclosure is an electrode etched by the etching machine according to the present disclosure.

A battery cell according to an aspect of the present disclosure includes the electrode etched by the etching machine according to the present disclosure.

A battery module according to an aspect of the present disclosure includes the electrode etched by the etching machine according to the present disclosure.

A battery pack according to an aspect of the present disclosure includes the electrode etched by the etching machine according to the present disclosure.

### Advantageous Effects

According to at least one of the embodiments of the present disclosure, it may be possible to provide the electrode with improved active material coating quality of the electrode current collector.

According to at least one of the embodiments of the present disclosure, it may be possible to provide the electrode having the equal active material coating area on the two surfaces of the electrode current collector.

According to at least one of the embodiments of the present disclosure, it may be possible to provide the etching machine for etching the peripheral portion of the coating using a laser to make the active material coating area on the two surfaces of the electrode current collector equal.

According to at least one of the embodiments of the present disclosure, it may be possible to provide the etching machine for minimizing damage to the electrode current collector when laser etching the peripheral portion of the active material coating on the electrode current collector.

The present disclosure may have many other effects, and these effects will be described in each embodiment, or regarding effects that can be easily anticipated by those skilled in the art, the corresponding description is omitted.

### BRIEF DESCRIPTION OF THE DRAWINGS

The accompanying drawings illustrate exemplary embodiments of the present disclosure and together with the following detailed description, serve to provide a further understanding of the technical aspect of the present disclosure, and thus the present disclosure should not be construed as being limited to the drawings.
FIG. 1 is a schematic diagram of an etching machine according to an embodiment of the present disclosure.
FIG. 2 is a diagram showing an example of an electrode.
FIG. 3 is a diagram showing an example of an electrode in which an etching area is set.
FIG. 4 is a diagram showing an electrode etched by an etching machine according to an embodiment of the present disclosure.
FIG. 5 is a schematic diagram of part of a process of etching an electrode by an etching machine according to an embodiment of the present disclosure.
FIG. 6 is a diagram showing an example of etching an electrode by an etching machine according to an embodiment of the present disclosure.
FIG. 7 is a graph showing changes in control variables of an etching machine according to an embodiment of the present disclosure during etching of an electrode by the etching machine.
FIG. 8 is a diagram showing an example of etching an electrode by an etching machine according to an embodiment of the present disclosure.
FIG. 9 is a graph showing changes in control variables of an etching machine according to an embodiment of the present disclosure during etching of an electrode by the etching machine.
FIG. 10 is a side view of an electrode etched by an etching machine according to an embodiment of the present disclosure.
FIG. 11 is a perspective view of an electrode etched by an etching machine according to an embodiment of the present disclosure.
FIG. 12 is a perspective view of a tab formed at an electrode etched by an etching machine according to an embodiment of the present disclosure.

### DETAILED DESCRIPTION

Hereinafter, exemplary embodiments of the present disclosure will be described in detail with reference to the accompanying drawings. Prior to the description, it should be understood that the terms or words used in the specification and the appended claims should not be construed as being limited to general and dictionary meanings, but rather interpreted based on the meanings and concepts corresponding to the technical aspect of the present disclosure on the basis of the principle that the inventor is allowed to define the terms appropriately for the best explanation.

Therefore, the embodiments described herein and the illustrations shown in the drawings are exemplary embodiments of the present disclosure to describe the technical aspect of the present disclosure and are not intended to be limiting, so it should be understood that a variety of other equivalents and modifications could have been made thereto at the time that the application was filed.

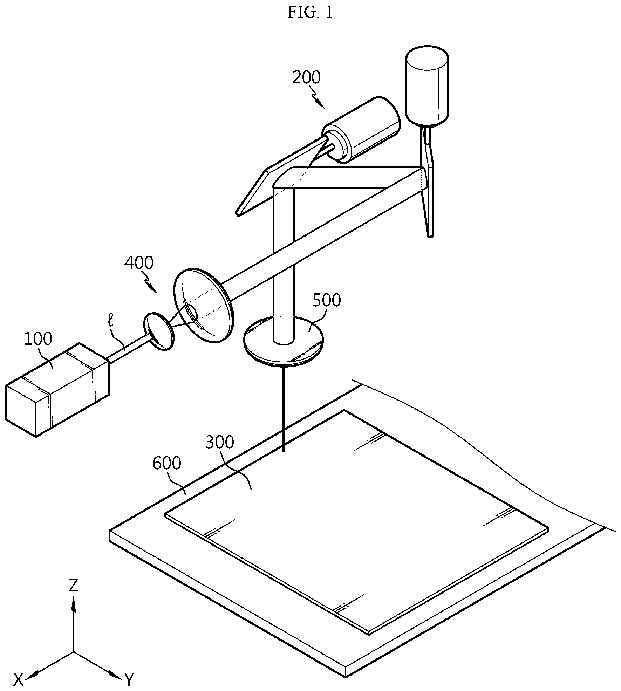

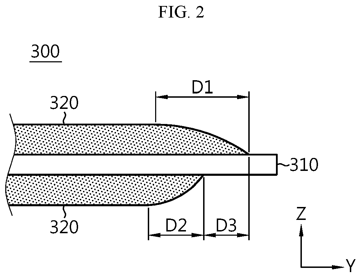

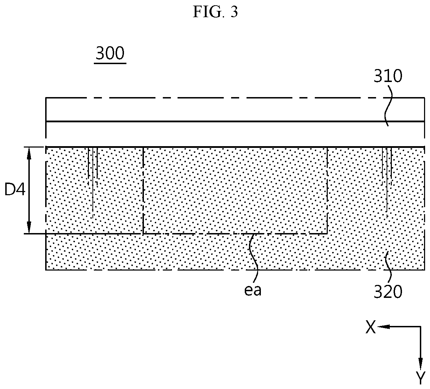

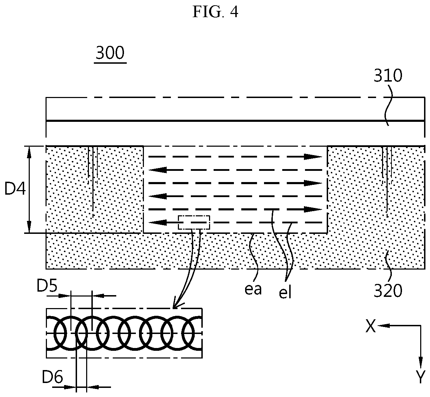

FIG. 1 is a schematic diagram of an etching machine according to an embodiment of the present disclosure. FIG. 2 is a diagram showing an example of an electrode 300. FIG. 3 is a diagram showing an example of the electrode 300 in which an etching area (ea) is set. FIG. 4 is a diagram showing the electrode 300 etched by the etching machine according to an embodiment of the present disclosure. Referring to FIGS. 1 to 4, the etching machine according to an embodiment of the present disclosure may include a laser source 100, a scanner 200 and a processor (not shown).

The laser source 100 may emit light (l). The laser source 100 may be a laser 100 or a laser oscillator 100. The laser source 100 may output nanosecond (ns) pulsed light (l) having infrared wavelength. Additionally, the average output of the laser source 100 may be approximately 100W to 500W. Additionally, the laser source 100 may be a fiber laser.

The light (l) from the laser source 100 may have the wavelength of approximately 1030 to 1070 nm. Additionally, the pulse width of the light (l) from the laser source 100 may be approximately 10 to 500 ns. Additionally, the laser beam quality M2 of the laser source 100 may be approximately smaller than 1.7. Additionally, the pulse repetition frequency of the laser source 100 may be approximately 100 to 1000 kHz.

The scanner 200 may deflect the light (l) from the laser source 100 to an electrode current collector 310 coated with an active material or the electrode 300. The scanner 200 may deflect the light (l) in at least one of X axis direction or Y axis direction. The light (l) deflected from the scanner 200 may enter the electrode 300, and etch the electrode active material 320 of the electrode 300.

The electrode current collector 310 may have a thin plate shape. The electrode current collector 310 may be made of metal. For example, the electrode current collector 310 may be made of aluminum or copper. The electrode active material 320 may be coated, formed, attached, fixed or coupled to each of two surfaces of the electrode current collector 310. The electrode active material 320 and the electrode current collector 310 may constitute the electrode 300. In this instance, the electrode active material 320 in a flowable state like a slurry may be coated on the electrode current collector 310. The coated electrode active material 320 may flow while it is dried. Accordingly, the electrode active material 320 may slide at the boundary between a portion of the electrode current collector 310 coated with the electrode active material 320 and a portion of the electrode current collector 310 not coated with the electrode active material. Accordingly, the thickness at the boundary portion coated with the electrode active material 320 may have a smaller thickness than the other coated portion.

Referring to FIG. 2, the electrode active material 320 coated on the upper surface of the electrode 300 may slide a length D1. Additionally, the electrode active material 320 coated on the lower surface of the electrode 300 may slide a length D2. The process of coating the electrode active material 320 on the upper surface of the electrode current collector 310 and the process of coating the electrode active material 320 on the lower surface may be performed in a sequential order. Accordingly, the process conditions when the electrode active material 320 is coated on the upper surface of the electrode current collector 310 and the process conditions when the electrode active material 320 is coated on the lower surface of the electrode current collector 310 may be different from each other. For example, the temperature and humidity of the electrode active material 320 slurry, the temperature and humidity around a coater and the temperature and processing speed of the coater may change during the process. Accordingly, the location at which the electrode active material 320 coated on the upper surface of the electrode current collector 310 starts to slide and the location at which the electrode active material 320 coated on the lower surface of the electrode current collector 310 starts to slide may not match to each other. Additionally, the slide length of the electrode active material 320 coated on the upper surface of the electrode current collector 310 and the slide length of the electrode active material 320 coated on the lower surface of the electrode current collector 310 may be different from each other. Referring to FIG. 2, the electrode active materials 320 coated on the two surfaces of the electrode current collector 310 may have the mismatch of a length D3. Accordingly, electrode capacity may reduce, and Li plating, i.e., deposition of lithium included in the electrode active material 320 may occur a loading difference between a positive electrode active material and a negative electrode active material opposite the positive electrode active material.

Referring to FIG. 3, the etching machine according to an embodiment of the present disclosure may be configured to etch at least one of the electrode active material 320 coated on the upper surface of the electrode current collector 310 or the electrode active material 320 coated on the lower surface of the electrode current collector 310. The etching machine according to an embodiment of the present disclosure may etch the electrode 300 to match the coating area of the electrode active material 320 coated on the upper surface of the electrode current collector 310 and the coating area of the electrode active material 320 coated on the lower surface of the electrode current collector 310. Additionally, the etching machine according to an embodiment of the present disclosure may etch the electrode 300 to remove the slide area of the electrode active material 320 coated on the upper surface of the electrode current collector 310 or the slide area of the electrode active material 320 coated on the lower surface of the electrode current collector 310. For example, referring to FIG. 3, the processor of an electrode device may set the etching area (ea) as much as a width D4 from the boundary between the area coated with the electrode active material 320 and the uncoated area before the etching. The width D4 may be a length including the slide area occurring at the coated electrode active material 320. The etching area (ea) may extend along X axis direction while maintaining the width D4.

Referring to FIG. 4, the processor may control at least one of the laser source 100 or the scanner 200. The processor may perform on/off control of the output of the laser source 100. Additionally, the processor may control a laser trigger signal of the laser source 100. The laser trigger signal may be referred to as a laser signal or a trigger signal. Additionally, the processor may control the scanner 200 to adjust the deflection of the light (l). The processor may allow the light (l) from the laser source 100 to enter the electrode current collector 310 coated with the electrode active material 320 or the electrode 300. The processor may control the laser source 100 and the scanner 200 to control the light (l) incident on the electrode 300 to move along a straight line. In this instance, a movement path of the light (l) may referred to as an etching line (el). The etching line (el) may include a plurality of etching lines (el). Additionally, the plurality of etching lines (el) may be arranged at a regular interval in the etching area (ea). The processor may control at least one of the laser source 100 or the scanner 200 to keep a pulse distance D5 of the light (l) incident on the electrode current collector 310 coated with the electrode active material 320 or the electrode 300 constant. The pulse distance D5 of the light (l) may be constant along the etching line (el). Additionally, the processor may control at least one of the laser source 100 or the scanner 200 to keep a pulse overlap D6 or pulse overlap rate (D6) of the light (l) incident on the electrode current collector 310 coated with the electrode active material 320 or the electrode 300 constant. The pulse overlap D6 or pulse overlap rate (D6) of the light (l) may be constant along the etching line (el). For example, the pulse overlap rate (D6) may be approximately 50%.

According to the above-described configuration of the present disclosure, the line energy or energy density transmitted to the electrode 300 may be uniform during the etching of the electrode 300. Accordingly, it may be possible to remove only the electrode active material 320 with minimal damage to the electrode current collector 310.

Additionally, according to the above-described configuration of the present disclosure, it may be possible to remove the slide occurred at the peripheral area of the electrode active material 320 coated on the electrode current collector 310 or the boundary area between the coated area with the electrode active material 320 and the uncoated area. Accordingly, it may be possible to improve the quality of the electrode 300.

Additionally, according to the above-described configuration of the present disclosure, the electrode active material 320 coated on the two surfaces of the electrode current collector 310 may match. Accordingly, it may be possible to increase the capacity of the electrode 300 and improve the quality of the electrode 300.

The etching machine according to an embodiment of the present disclosure may include a beam expander 400. The light (l) from the laser source 100 may enter the scanner 200 via the beam expander 400. The beam expander 400 may be configured to adjust the diameter or divergence angle of the light (l) from the laser source 100. The etching machine may optionally include the beam expander 400 to precisely control the light (l).

The etching machine according to an embodiment of the present disclosure may include a condensing lens 500. The condensing lens 500 may converge the light (l) deflected through the scanner 200 at a single point. That is, the condensing lens 500 may converge the light (l) deflected through the scanner 200 at a single point on the surface of the electrode active material 320 coated on the electrode current collector 310. For example, the condensing lens 500 may be an f-theta focusing lens.

In this instance, the effective focal length of the condensing lens 500 may be approximately 250 mm or more and 420 mm or less. Additionally, the fluence of the light (l) from the laser source 100 may be approximately 7J/cm² or more and 12 J/cm² or less.

As the fluence of the light (l) from the laser source 100 is higher, the volume of the electrode active material 320 that may be removed or etched per pulse increase. However, when the fluence of the light (l) exceeds the melting threshold or vaporization threshold of the metal (aluminum or copper) of which the electrode current collector 310 is made, the electrode current collector 310 may be damaged or melt.

In this instance, the diameter and pulse energy of the light (l) may be calculated by controlling at least one of the diameter of the light (l) from the laser source 100, the focal length of the condensing lens 500 or the magnification of the beam expander 400. Using this, the processor may control the fluence of the light (l) from the laser source 100 to prevent it from exceeding the melting threshold or vaporization threshold of the electrode current collector 310.

The beam expander 400 of the etching machine according to an embodiment of the present disclosure may be used in combination with the plurality of laser sources 100. The light (l) from the laser source 100 is usually approximately 7 to 9 mm in diameter, and when the light (l) spreads out, it results in low output and consequential low process efficiency. Accordingly, to increase the process efficiency, the plurality of laser sources 100 may be arranged in parallel, one beam expander 400 may be used, and the diameter and divergence angle of the light (l) from the plurality of laser sources 100 may be controlled at one time.

In this instance, the effective focal length of the condensing lens 500 may be approximately 250 mm or more and 420 mm or less. Accordingly, the effective process window may be largest. Additionally, it may be possible to reduce the influence of a change in focal length caused by a small change in output of the laser source 100 or vibration or a change in diameter of the light (l) from the laser source 100.

The etching machine according to an embodiment of the present disclosure may include a stage 600. The stage 600 may be referred to as a die 600. The electrode 300 may be placed on the stage 600. The stage 600 may support or hold the electrode 300. Additionally, the stage 600 may be movable, and the processor may control the movement of the stage 600. Accordingly, the electrode 300 placed on the stage 600 may be movable.

The laser source 100 of the etching machine according to an embodiment of the present disclosure may output nanosecond (ns) light (l) having infrared wavelength. Accordingly, the etching machine may remove only the electrode active material 320 with minimal damage to the electrode current collector 310. In contrast, when light (l) with picosecond (ps) or shorter pulse width is used to etch the electrode 300, there may be a higher damage risk of the electrode current collector 310. Additionally, when light in wavelengths corresponding to green light or wavelengths corresponding to ultraviolet light is used to etch the electrode 300, there may be a higher damage risk of the electrode current collector 310. It is because light corresponding to green light or ultraviolet light can be absorbed by aluminum or copper of which the electrode current collector 310 is made at a high absorption rate. Accordingly, it is preferred to etch using nanosecond pulsed light (l) having a low absorption rate in aluminum or copper of which the electrode current collector 310 is made and a high absorption rate in the electrode active material 320. Accordingly, it may be possible to remove the electrode active material 320 without damage to the electrode current collector 310.

The processor of the etching machine according to an embodiment of the present disclosure may perform control to scan multiple times in the etching area (ea). The processor may perform control to scan multiple times along the etching line (el). For example, the number of scans may be 2. In contrast, when the coating thickness of the electrode active material 320 is approximately 150 µm or more, the number of scans may be 3.

To complete the etching of the electrode active material 320 by single scan, the laser fluence that is higher than the melting threshold of the electrode current collector 310 is used, and this may increase the damage risk of the electrode current collector 310. Additionally, when scanning is conducted four or more times, damage to the electrode current collector 310 may be prevented, but the processing time may be longer. Accordingly, scanning may be preferably conducted two or three times.

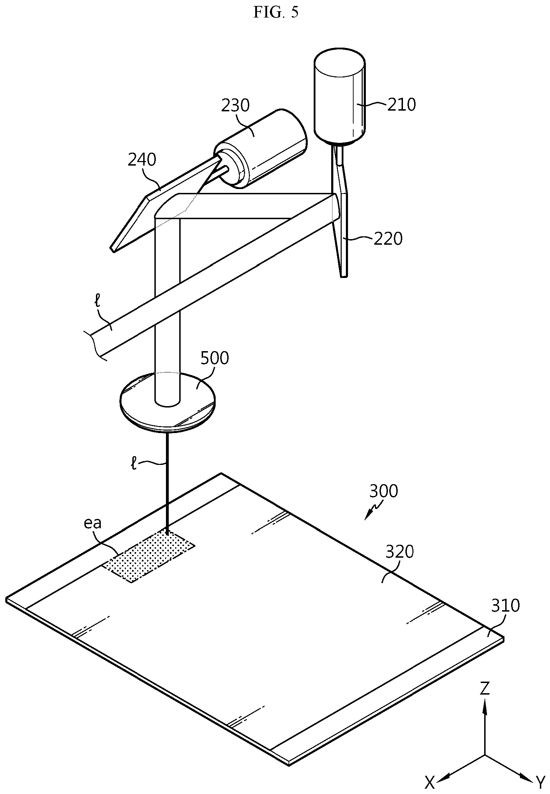

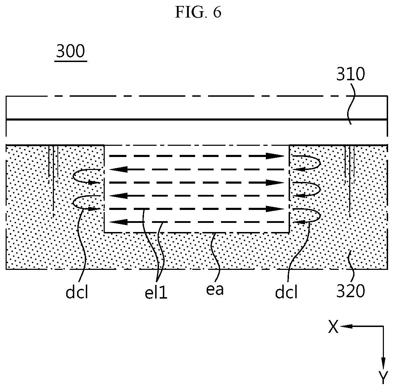

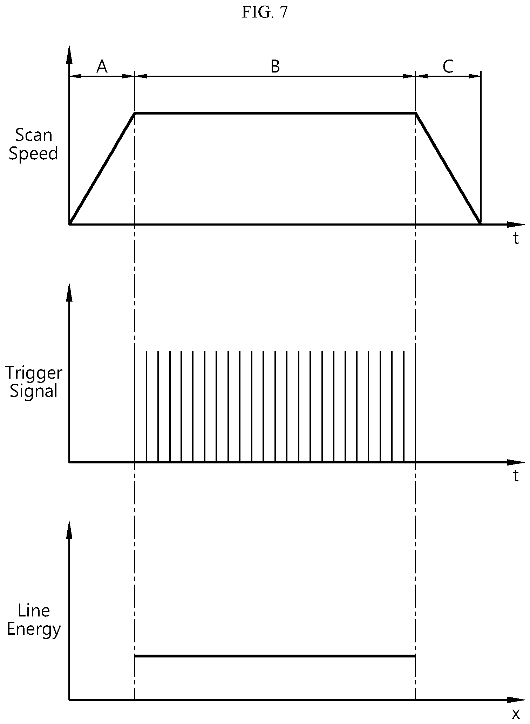

FIG. 5 is a schematic diagram of part of the process of etching the electrode 300 by the etching machine according to an embodiment of the present disclosure. FIG. 6 is a diagram showing an example of etching the electrode 300 by the etching machine according to an embodiment of the present disclosure. FIG. 7 is a graph showing changes in control variables of the etching machine according to an embodiment of the present disclosure during the etching of the electrode 300 by the etching machine. Referring to FIGS. 5 to 7, the processor of the etching machine according to an embodiment of the present disclosure may stop the output of the laser source 100 while the scan speed of the scanner 200 increases or decreases.

The etching area (ea) may include the plurality of etching lines (el1). In this instance, directions in which the adjacent etching lines (el1) run may be opposite. Accordingly, to proceed with the etching from any one etching line (el1) to the next etching line (el1), it may be necessary to change the scan direction. Additionally, before the scan direction changes, the scan speed may decrease and become zero (0). Additionally, after the scan speed becomes zero (0), the scan direction may change and the scan speed may increase. In contrast, the scan speed may be kept constant during the etching along the etching line (el1). In this instance, the etching line (el1) may be referred to as a scan line (el1).

The processor may turn off the output of the laser source while the scan direction changes or while the scan speed decreases and becomes zero (0) and then increases. That is, the processor may only turn on the output of the laser source 100 while the scan speed is kept constant.

While the output of the laser source 100 is off, an imaginary trajectory (dcl) of scan focus points of the scanner 200 may connect the adjacent etching lines (el1). The imaginary trajectory (dcl) of scan focus points may connect the ending point of any one etching line (el1) to the starting point of the adjacent etching line (el1). The imaginary trajectory (dcl) of scan focus points may be referred to as an imaginary scan line (dcl), a scan line (dcl) or a direction change line (dcl). In this instance, the imaginary trajectory (dcl) of scan focus points may be located outside of the etching area (ea).

Referring to FIG. 7, the processor may off the trigger signal to the laser source 100 while the scan speed increases (range A). Accordingly, the line energy transmitted to the electrode 300 while the scan speed increases (range A) may be zero (0).

Additionally, the processor may transmit the trigger signal to the laser source 100 at a regular interval while the scan speed is kept constant (range B). Accordingly, the line energy transmitted to the electrode 300 while the scan speed is kept constant (range B) may maintain a constant value. In this instance, the processor may etch the electrode 300 while maintaining a constant pulse distance along the etching line (el1).

Additionally, the processor may off the trigger signal to the laser source 100 while the scan speed decreases (range C). Accordingly, the line energy transmitted to the electrode 300 while the scan speed decreases (range C) may be zero (0).

According to the above-described configuration of the present disclosure, the electrode 300 may be etched at a uniform level in the etching area (ea). Accordingly, it may be easy to perform control to etch the electrode active material 320 without damage to the electrode current collector 310.

Referring to FIGS. 5 to 7, the scanner of the etching machine according to an embodiment of the present disclosure may include mirrors 220, 240 to reflect the light (l) from the laser source 100, and motors 210, 230 to rotate the mirrors 220, 240. Additionally, the processor may control the laser source 100 to stop the output of the laser source 100 while the angular velocity of the motors 210, 230 increases or decreases.

The scanner 200 may include at least one mirror 220, 240. The scanner 200 may include a first mirror 220 and a second mirror 240. For example, the first mirror 220 may deflect the light (l) in Y axis direction. Additionally, the second mirror 240 may deflect the light (l) in X axis direction. The first mirror 220 may be connected to a rotation axis of a first motor 210. Additionally, the second mirror 240 may be connected to a rotation axis of a second motor 230. The first motor 210 may rotate the first mirror 220. The second motor 230 may rotate the second mirror 240. The processor may deflect the light (l) from the laser source 100 with respect to the X-Y plane by controlling the rotation of the first motor 210 and the second motor 230. Specifically, the processor may control the scan speed of the etching machine by controlling the angular velocity of the first motor 210 and the angular velocity of the second motor 230. In this instance, the scanner 200 may further include an encoder at the motors 210, 230 or the mirrors 220, 240. The processor may detect the angular velocity of the motors 210, 230 or the mirrors 220, 240 from the encoder.

For example, the processor may control the laser source 100 so as not to output the laser source 100 while the angular velocity of at least one of the first motor 210 or the second motor 230 increases or decreases. In this instance, while the angular velocity at least one of the first motor 210 or the second motor 230 increases or decreases (ranges A, C), the imaginary trajectory (dcl) of scan focus points of the scanner 200 may connect the adjacent etching lines (el1). The imaginary trajectory (dcl) of scan focus points may connect the ending point of any one etching line (el1) to the starting point of the adjacent etching line (el1). Additionally, the line energy transmitted to the electrode 300 while the angular velocity of at least one of the first motor 210 or the second motor 230 increases or decreases may be zero (0).

Additionally, the processor may transmit the trigger signal to the laser source 100 at a regular interval while the angular velocity of at least one of the first motor 210 or the second motor 230 is kept constant (range B). Accordingly, the line energy transmitted to the electrode 300 while the angular velocity of at least one of the first motor 210 or the second motor 230 is kept constant (range B) may maintain a constant value. In this instance, the processor may etch the electrode 300 while maintaining a constant pulse distance along the etching line (el1).

According to the above-described configuration of the present disclosure, the electrode 300 may be etched at a uniform level in the etching area (ea). Accordingly, it may be easy to perform control to etch the electrode active material 320 without damage to the electrode current collector 310.

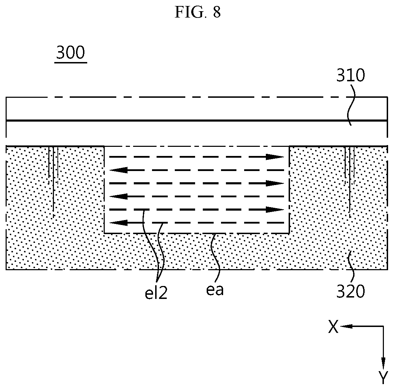

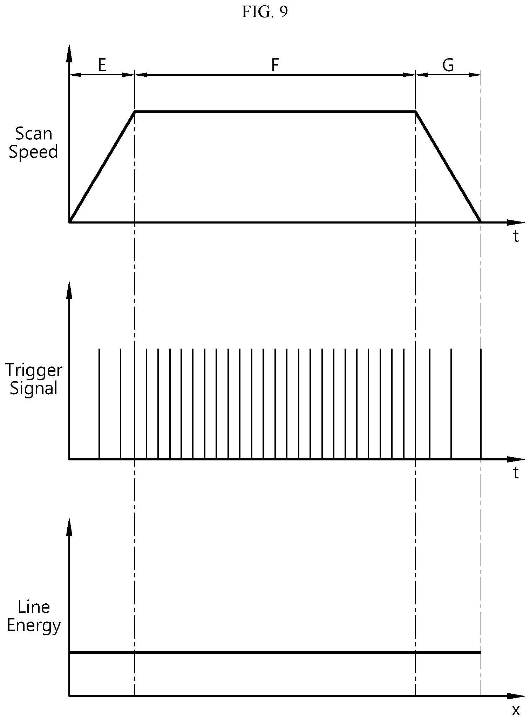

FIG. 8 is a diagram showing an example of etching the electrode 300 by the etching machine according to an embodiment of the present disclosure. FIG. 9 is a graph showing changes in control variables of the etching machine according to an embodiment of the present disclosure during the etching of the electrode 300 by the etching machine. Referring to FIGS. 5, 8 and 9, the processor of the etching machine according to an embodiment of the present disclosure may perform control to reduce a trigger signal interval of the laser source 100 with the increasing scan speed of the scanner 200.

The processor may perform control to reduce the trigger signal interval of the laser source 100 with the increasing scan speed of the scanner 200 (range E), to keep the pulse distance of the light (l) incident on the electrode 300 constant.

Additionally, the processor may perform control to keep the trigger signal interval of the laser source 100 constant while the scan speed of the scanner 200 is kept constant (range F), to keep the pulse distance of the light (l) incident on the electrode 300 constant.

In this instance, the processor may control the laser source 100 to make the pulse distance at the increasing scan speed of the scanner 200 and the pulse distance at the constant scan speed equal to each other. Additionally, the processor may control the laser source 100 to make the line energy transmitted to the electrode 300 at the increasing scan speed of the scanner 200 and the line energy transmitted to the electrode 300 at the constant scan speed equal to each other.

According to the above-described configuration of the present disclosure, even though the scan speed changes, the pulse distance at the electrode 300 may be constant, and the electrode 300 may be etched at a uniform level in the etching area (ea). Accordingly, it may be easy to perform control to etch the electrode active material 320 without damage to the electrode current collector 310.

Referring to FIGS. 5, 8 and 9, the processor of the etching machine according to an embodiment of the present disclosure may perform control to increase the trigger signal interval of the laser source 100 with the decreasing scan speed of the scanner 200.

The processor may perform control to increase the trigger signal interval of the laser source 100 with the decreasing scan speed of the scanner 200 (range G), to keep the pulse distance of the light (l) incident on the electrode 300 constant.

Additionally, the processor may perform control to keep the trigger signal interval of the laser source 100 constant while the scan speed of the scanner 200 is kept constant (range F), to keep the pulse distance of the light (l) incident on the electrode 300 constant.

In this instance, the processor may control the laser source 100 to make the pulse distance at the decreasing scan speed of the scanner 200 and the pulse distance at the constant scan speed equal to each other. Additionally, the processor may control the laser source 100 to make the line energy transmitted to the electrode 300 at the decreasing scan speed of the scanner 200 and the line energy transmitted to the electrode 300 at the constant scan speed equal to each other.

According to the above-described configuration of the present disclosure, even though the scan speed changes, the pulse distance at the electrode 300 may be constant, and the electrode 300 may be etched at a uniform level in the etching area (ea). Accordingly, it may be easy to perform control to etch the electrode active material 320 without damage to the electrode current collector 310.

Referring to FIGS. 5, 8 and 9, the processor of the etching machine according to an embodiment of the present disclosure may reduce the trigger signal interval of the laser source 100 with the increasing angular velocity of the motors 210, 230.

The processor may perform control to reduce the trigger signal interval of the laser source 100 with the increasing angular velocity of at least one of the first motor 210 or the second motor 230 of the scanner 200 (range E), to keep the pulse distance of the light (l) incident on the electrode 300 constant.

Additionally, the processor may perform control to keep the trigger signal interval of the laser source 100 constant while the angular velocity of at least one of the first motor 210 or the second motor 230 of the scanner 200 is kept constant (range F), to keep the pulse distance of the light (l) incident on the electrode 300 constant.

In this instance, the processor may control the laser source 100 to make the pulse distance at the increasing angular velocity of at least one of the first motor 210 or the second motor 230 of the scanner 200 and the pulse distance at the constant angular velocity of at least one of the first motor 210 or the second motor 230 equal to each other. Additionally, the processor may control the laser source 100 to make the line energy transmitted to the electrode 300 at the increasing angular velocity of at least one of the first motor 210 or the second motor 230 of the scanner 200 and the line energy transmitted to the electrode 300 at the constant angular velocity of at least one of the first motor 210 or the second motor 230 equal to each other.

According to the above-described configuration of the present disclosure, even though the angular velocity of at least one of the first motor 210 or the second motor 230 changes, the pulse distance at the electrode 300 may be constant, and the electrode 300 may be etched at a uniform level in the etching area (ea). Accordingly, it may be easy to perform control to etch the electrode active material 320 without damage to the electrode current collector 310.

Referring to FIGS. 5, 8 and 9, the processor of the etching machine according to an embodiment of the present disclosure may perform control to increase the trigger signal interval of the laser source 100 with the decreasing angular velocity of the motors 210, 230.

The processor may increase the trigger signal interval of the laser source 100 with the decreasing angular velocity of at least one of the first motor 210 or the second motor 230 of the scanner 200 (range G), to keep the pulse distance of the light (l) incident on the electrode 300 constant.

Additionally, the processor may keep the trigger signal interval of the laser source 100 constant while the angular velocity of at least one of the first motor 210 or the second motor 230 of the scanner 200 is kept constant (range F), to keep the pulse distance of the light (l) incident on the electrode 300 constant.

In this instance, the processor may control the laser source 100 to make the pulse distance at the decreasing angular velocity of at least one of the first motor 210 or the second motor 230 of the scanner 200 and the pulse distance at the constant angular velocity of at least one of the first motor 210 or the second motor 230 equal to each other. Additionally, the processor may control the laser source 100 to make the line energy transmitted to the electrode 300 at the decreasing angular velocity of at least one of the first motor 210 or the second motor 230 of the scanner 200 and the line energy transmitted to the electrode 300 at the constant angular velocity of at least one of the first motor 210 or the second motor 230 equal to each other.

According to the above-described configuration of the present disclosure, even though the angular velocity of at least one of the first motor 210 or the second motor 230 changes, the pulse distance at the electrode 300 may be constant, and the electrode 300 may be etched at a uniform level in the etching area (ea). Accordingly, it may be easy to perform control to etch the electrode active material 320 without damage to the electrode current collector 310.

The processor of the etching machine according to an embodiment of the present disclosure may perform control to keep the trigger signal interval of the laser source 100 constant while the scan speed of the scanner 200 is kept constant.

Additionally, the processor of the etching machine according to an embodiment of the present disclosure may control at least one of the laser source 100 or the scanner 200 to keep the line energy density along the trajectory of the light (l) incident on the electrode current collector 310 constant.

According to the above-described configuration of the present disclosure, the electrode 300 may be etched at a uniform level in the etching area (ea). Accordingly, it may be easy to perform control to etch the electrode active material 320 without damage to the electrode current collector 310.

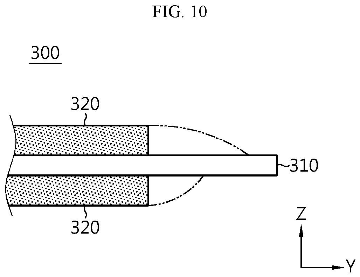

FIG. 10 is a side view of the electrode 300 etched by the etching machine according to an embodiment of the present disclosure. Referring to FIG. 10, the electrode 300 etched by the etching machine according to an embodiment of the present disclosure may have the electrode active material 320 coating areas on the two surfaces matched to each other. Additionally, the electrode active material 320 coating on the two surfaces of the electrode 300 may be configured to remove the slide area. Accordingly, the thickness of the electrode active material 320 coating area may be constant.

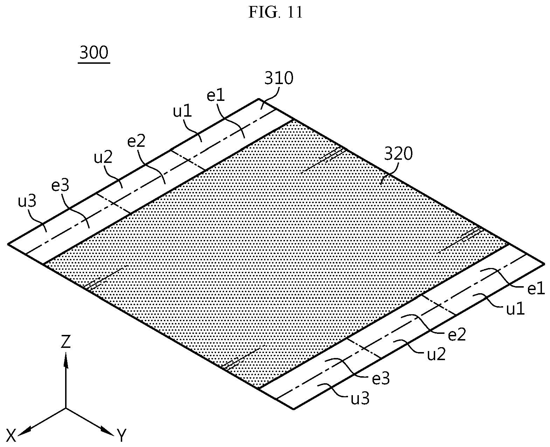

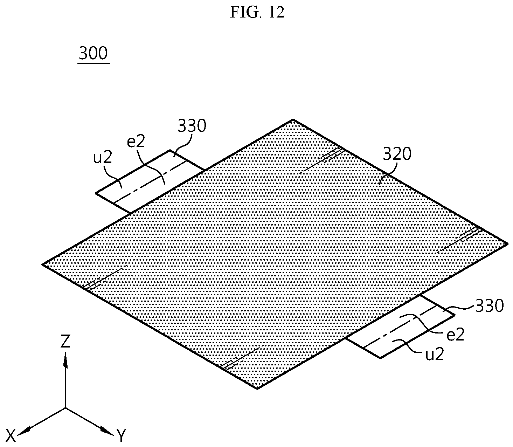

FIG. 11 is a perspective view of the electrode 300 etched by the etching machine according to an embodiment of the present disclosure. FIG. 12 is a perspective view of a tab 330 formed at the electrode 300 etched by the etching machine according to an embodiment of the present disclosure. Referring to FIGS. 11 and 12, the electrode 300 etched by the etching machine according to an embodiment of the present disclosure may include the tab 330. The electrode 300 may include areas u1, u2, u3 where the electrode 300 is not coated with the electrode active material 320 and areas e1, e2, e3 where the electrode 300 is coated with the electrode active material 320 and etched. In this instance, when some areas u1, u3, e1, e3 of the electrode current collector 310 are removed, the remaining areas u2, e2 may be the tab 330. The tab 330 may be a portion of the electrode current collector 310. At least a portion of the tab 330 may be the area u2 not coated with the electrode active material 320, and the remainder may be the area e2 coated with the electrode active material 320 and etched. The tab 330 may have uniform thickness and color. Meanwhile, the areas e1, e2 on two sides of the etched area e2 among the areas u2, e2 that may be used as the tab 330 will be cut and removed, so they may not be etched to increase the process efficiency.

A battery cell according to an aspect of the present disclosure may include the electrode 300 etched by the etching machine of the present disclosure. The electrode 300 of the present disclosure may be a positive electrode and/or a negative electrode. The positive electrode and the negative electrode may be stacked with a separator interposed between them to form an electrode assembly. The positive electrode and/or negative electrode may include a plurality of positive electrodes and/or negative electrodes, and the plurality of tabs 330 of the plurality of electrodes having the same polarity may be electrically connected to electrode leads. Additionally, the plurality of electrodes 300 may constitute the battery cell. In this instance, the battery cell may be a pouch-type secondary battery. The pouch-type secondary battery may include a pouch packaging accommodating the electrode 300 and an electrolyte. The pouch packaging may be formed by sealing the edge of two pouches in which the electrode 300 and the electrolyte are received. The pouch-type secondary battery may include an accommodation portion at the center and a sealing portion around the accommodation portion. The pouch-type secondary battery may have a rectangular shape with four edges, and among the four edges, three or four edges may be sealed.

A battery module according to an aspect of the present disclosure may include the electrode 300 etched by the etching machine of the present disclosure. In addition to the electrode 300, the battery module may further include a variety of other components, for example, components of the battery module known at the time the application was filed, such as a busbar assembly, a module case, a cooling unit and so on.

A battery pack according to an aspect of the present disclosure may include the electrode 300 etched by the etching machine of the present disclosure. In addition to the electrode 300, the battery pack may further include a variety of other components, for example, components of the battery pack known at the time the application was filed, such as a battery management system (BMS), a busbar, a pack case, a relay, a current sensor and so on.

The terms indicating directions such as upper, lower, left, right, front and rear are used for convenience of description, but it is obvious to those skilled in the art that the terms may change depending on the position of the stated element or an observer.

While the present disclosure has been hereinabove described with regard to a limited number of embodiments and drawings, the present disclosure is not limited thereto and it is apparent that a variety of changes and modifications may be made by those skilled in the art within the technical aspect of the present disclosure and the scope of the appended claims and their equivalents.

## Claims

1. An etching machine, comprising:
a laser source;
a scanner configured to deflect light from the laser source to an electrode current collector coated with an electrode active material; and
a processor configured to control at least one of the laser source or the scanner to keep a pulse distance of the light incident on the electrode current collector constant.

2. The etching machine according to claim 1, wherein the processor stops the output of the laser source while a scan speed of the scanner increases or decreases.

3. The etching machine according to claim 1, wherein the scanner includes:
a mirror configured to reflect the light from the laser source; and
a motor configured to rotate the mirror,
wherein the processor stops the output of the laser source while an angular velocity of the motor increases or decreases.

4. The etching machine according to claim 1, wherein the processor performs control to reduce a trigger signal interval of the laser source with an increasing scan speed of the scanner.

5. The etching machine according to claim 1, wherein the scanner includes:
a mirror configured to reflect the light from the laser source; and
a motor configured to rotate the mirror, and
wherein the processor performs control to reduce a trigger signal interval of the laser source with an increasing angular velocity of the motor.

6. The etching machine according to claim 1, wherein the processor performs control to increase a trigger signal interval of the laser source with a decreasing scan speed of the scanner.

7. The etching machine according to claim 1, wherein the scanner includes:
a mirror configured to reflect the light from the laser source; and
a motor configured to rotate the mirror, and
wherein the processor performs control to increase a trigger signal interval of the laser source with a decreasing angular velocity of the motor.

8. The etching machine according to claim 1, wherein the processor performs control to keep a trigger signal interval of the laser source constant while a scan speed of the scanner is kept constant.

9. The etching machine according to claim 1, wherein the processor controls at least one of the laser source or the scanner to keep a line energy density constant along a trajectory of the light incident on the electrode current collector.

10. An electrode etched by the etching machine according to any one of claims 1 to 9.

11. A battery cell comprising the electrode etched by the etching machine according to any one of claims 1 to 9.

12. A battery module comprising the electrode etched by the etching machine according to any one of claims 1 to 9.

13. A battery pack comprising the electrode etched by the etching machine according to any one of claims 1 to 9.
